# EUROPÄISCHE PATENTSCHRIFT

(11) **EP 3 453 101 B1**
(45) Veröffentlichungstag und Bekanntmachung des Hinweises auf die Patenterteilung: **13.01.2021**
(21) Anmeldenummer: 17721558.9
(22) Anmeldetag: 20.04.2017
(51) Int. Cl.: H02K 5/10, H02K 5/04, H02K 15/14

(54) **VERFAHREN ZUR HERSTELLUNG EINES POLGEHÄUSES**
METHOD FOR PRODUCING A POLE HOUSING
PROCÉDÉ DE PRODUCTION D'UN BOÎTIER POLAIRE

(30) Priorität: 04.05.2016 DE 102016207808
(43) Veröffentlichungstag der Anmeldung: 13.03.2019
(73) Patentinhaber: Brose Fahrzeugteile SE & Co. Kommanditgesellschaft, Würzburg, 97076 Würzburg (DE); Schürholz GmbH&Co. KG Stanztechnik, 58840 Plettenberg (DE)
(72) Erfinder: BRAUNGARDT, Norman, 96269 Großheirat (DE); KAISER, Christian, 96161 Gerach (DE); KIFER, Alexander, 95511 Mistelbach (DE); CASTRIGNANO, Angelo, 58840 Plettenberg (DE); WORTMANN, Stefan, 58840 Plettenberg (DE)
(74) Vertreter: FDST Patentanwälte
(86) Internationale Anmeldenummer: PCT/EP2017/059433
(87) Internationale Veröffentlichungsnummer: WO 2017/190963

(56) Entgegenhaltungen:
- DE-A1- 2 411 621
- DE-A1-102011 012 317
- US-A- 5 426 337

## Beschreibung

Die Erfindung betrifft ein Verfahren zur Herstellung eines Polgehäuses für einen Elektromotor. Die Erfindung betrifft weiterhin ein nach einem derartigen Verfahren hergestelltes Polgehäuse sowie einen mit einem solchen Polgehäuse ausgestatteten Elektromotor.

Elektromotoren, insbesondere Kompaktmotoren, weisen häufig ein sogenanntes Polgehäuse auf, in welches innenwandseitig Permanentmagnete, die den Stator des Elektromotors bilden, und der Rotor (Läufer oder Anker) eingesetzt sind.

Polgehäuse werden häufig im sogenannten Tiefziehverfahren hergestellt. Das Polgehäuse kann auch in der klassischen Rohrfertigung hergestellt werden, bei welcher ein Rohr beispielsweise durch Spannungsarmglühen und mehrmaliges Rohrziehen in die spätere Polrohrform geformt wird. Hiernach kann das Rohr zum Beispiel in einer Sondermaschine abgelängt werden. Anschließend werden die Stirnflächen des Rohres geschliffen. Abschließend wird das Rohr zum Schutz vor Korrosion als Schüttgut verzinkt. Nachteilig sind hierbei insbesondere die relativ große Anzahl von einzelnen Herstellungsschritten, das nachträgliche Verzinken und das kostenintensive Halbzeug in Form des Rohres.

Aus der DE 103 21 863 A1 ist ein Verfahren zur Herstellung eines Rohres bekannt, bei dem das Rohr aus einem im Wesentlichen ebenen metallischen Blech geformt wird. Dabei sind die Längskanten des Bleches durch formschlüssig ineinandergreifende Elemente miteinander verbunden.

Aus der DE 100 23 313 A1 ist ein Verfahren zum Befestigen eines Stators in einem Gehäuse offenbart, bei dem das Gehäuse aus einem Blechstreifen mittels Biegen hergestellt ist. Die im Anschluss an den Biegevorgang sich berührenden Endkanten des Blechstreifens greifen unter Bildung eines Fügespaltes ineinander, wobei der Innendurchmesser des Gehäuses größer als der Außendurchmesser des Stators sein soll.

Derartige mechanische Fügeverbindungen verursachen in der Regel verfahrensbedingte, geometrische und konstruktive Unebenheiten. Beim Vercrimpen oder Bördeln werden die ineinandergreifenden Elemente durch plastische Verformung miteinander verbunden, so dass Grate entstehen. Diese erfordern eine zusätzliche Nachbearbeitung. Eine solche Verbindung bietet in der Regel keinen ausreichenden Schutz vor eindringender Flüssigkeit.

In der WO 2012/113432 A3 ist ein Verfahren zur Herstellung eines gas- und flüssigkeitsdichten Polgehäuses beschrieben. Hierzu wird eine aus einem vorverzinkten Blechmaterial hergestellte Rohrmantelfläche mittels eines stoffschlüssigen Laserverschweißens zu einem Polrohr gefügt. Anschließend wird ein Lagerschild in einem zweiten Verfahrensschritt an einer Stirnseite des Polrohrs stoffschlüssig angebunden.

Die DE 10 2011 012 317 A1 offenbart ein Verfahren zur Herstellung eines gas- und flüssigkeitsdichten Polgehäuses. Gemäß dem bekannten Verfahren wird eine aus einem vorverzinkten Blechmaterial hergestellte Rohrmantelfläche mittels eines stoffschlüssigen Laserverschweißens zu einem zylinderförmigen Polrohr gefügt.

Die US 5,426,337 A beschreibt ein Polgehäuse für einen Elektromotor, welches aus einem rechteckigen Blechmaterial gefertigt ist. das Blechmaterial wird zu einem zylindrischen Rohrmantel geformt, wobei die in Rohrlängsrichtung verlaufenden Rohrlängs- oder Endkanten des Rohrmantels mit gebogenen Formkonturen versehen ist. Im Fügezustand des Rohrmantels greifen die einander zugewandten Formkonturen der Rohrlängskanten formschlüssig ineinander. Anschließend wird ein Deckel mittels Crimpens stirnseitig an dem Polrohr befestigt.

Der Erfindung liegt die Aufgabe zugrunde, ein zur Herstellung eines Polgehäuses besonders geeignetes Verfahren anzugeben. Das Verfahren soll insbesondere eine einfache, zeitsparende und kostengünstige Herstellung des Polgehäuses ermöglichen. Der Erfindung liegt weiterhin die Aufgabe zugrunde, ein nach einem derartigen Verfahren hergestelltes Polgehäuse sowie einen mit einem solchen Polgehäuse versehenen Elektromotor anzugeben.

Bezüglich des Verfahrens wird die genannte Aufgabe mit den Merkmalen des Anspruchs 1 und bezüglich des Polgehäuses mit den Merkmalen des Anspruchs 7 sowie bezüglich des Elektromotors mit den Merkmalen des Anspruchs 8 erfindungsgemäß gelöst. Vorteilhafte Ausgestaltungen und Weiterbildungen sind Gegenstand der jeweiligen Unteransprüche.

Verfahrensgemäß wird zunächst eine Rohrmantelfläche aus einem Blechmaterial bestehende Rohrmantelfläche bereitgestellt. Zur Bereitstellung der nachfolgend als Rohrmantel bezeichneten Rohrmantelfläche wird das vorzugsweise vorverzinkte Blechmaterial beispielsweise von einer Blechrolle (Blechcoil) abgerollt und gerichtet sowie einer Stanzeinrichtung zum Abtrennen des etwa rechteckförmigen Rohrmantels zugeführt.

Der Rohrmantel aus dem verzinkten Blechmaterial wird anschließend derart zu einem zylinderförmigen Polrohr geformt, dass die in Rohrlängsrichtung verlaufenden Rohrlängs- oder Endkanten des Rohrmantels (Mantellängskanten) einander zugewandt sind. Hernach werden diese Mantellängskanten der Rohrmantelfläche unter Bildung eines umfangsseitig geschlossenen Polrohres miteinander verbunden.

Abschließend wird ein Deckel an einem stirnseitigen Rohrende form- und/oder kraftschlüssig befestigt. Dadurch wird keine zusätzliche Schweißeinrichtung für das Befestigen des Deckels benötigt, wodurch Werkzeugkosten eingespart werden. Dies überträgt sich vorteilhaft auf die Herstellungskosten des Polgehäuses.

Durch die Verwendung eines Rohrmaterials aus einem bereits vorverzinkten Blechmaterial, dass zu einem zylinderförmigen Polrohr geformt und dessen Mantellängskanten anschließend miteinander stoffschlüssig verbunden werden, wird die Anzahl der benötigten Prozessschritte vorteilhaft reduziert, da sowohl ein nachträgliches Verzinken entfällt als auch nachträgliche Bearbeitungen eingespart werden. Somit sind eine schnellere Herstellung und damit eine höhere Ausbringungsmenge möglich als bei bisherigen Verfahren. Ferner werden die Kosten vorteilhaft gesenkt, da insbesondere die benötigten Werkzeugkosten bei der Anbringung des Deckels verringert sind. Daraus resultiert eine allgemeine Reduzierung der Stückkosten gegenüber nach herkömmlichen Verfahren hergestellten Pohlgehäusen. Insbesondere für die Automobilindustrie werden Polgehäuse in großen Stückzahlen benötigt, so dass eine kostengünstige und qualitativ hochwertige Fertigung wünschenswert ist.

Der Deckel, der insbesondere als ein Lageschild des Polgehäuses für einen Elektromotor dient, wird vorzugsweise als Fertigteil bereitgestellt. Dies ermöglicht die Bereitstellung verschiedenster Lagerdeckel, während diese Flexibilität bei einem tiefgezogenen Pohlgehäuse nicht gegeben ist.

In einer geeigneten Weiterbildung wird der Rohrmantel zunächst einer Biegeeinrichtung zur Vorformung (Rollen, Biegen, Clinchen) in eine annähernd runde bzw. zylindrische Form und anschließend einer Kalibriereinrichtung zur Erstellung der kreisrunden Form des zylindrischen Polrohrs zugeführt. In der Kalibriereinrichtung sind die gewünschten Innen- und Außendurchmesser des Polrohrs einstellbar. Dadurch ist eine besonders hohe Fertigungsgenauigkeit sichergestellt, was sich vorteilhaft im Hinblick auf eine Herstellung hoher Stückzahlen des Polgehäuses überträgt.

In einer geeigneten Ausbildung werden in einem nächsten Verfahrensschritt die Mantellängskanten des Rohrmantels zur Bildung eines umfangsseitig geschlossenen Polrohres miteinander stoffschlüssig verbunden. Hierzu wird der rotationssymmetrisch (z. B. zylinderförmig mit oder ohne Einlaufschräge) gebogene Rohrmantel geeigneterweise einer Schweißeinrichtung zugeführt, welche die Mantellängskanten des verzinkten Rohrmantels mittels einer Laserschweißnaht stoffschlüssig miteinander verbindet. Eine solche Verbindung mittels einer Laserschweißnaht gewährleistet erfahrungsgemäß eine zuverlässige und insbesondere fluidundurchlässige Stoßkantenverbindung. Diese ist aufgrund der dadurch vermiedenen Überlappung der Mantellängskanten darüber hinaus vorzugsweise auch materialsparend.

Ein weiterer Vorteil der lasergeschweißten Endkantenverbindung ist der vergleichsweise geringe, konzentrierte Energieeintrag in das Polrohr und somit ein geringerer thermisch bedingter Verzug. Dadurch können wesentlich engere Toleranzen des Polrohres schnell und einfach hergestellt und eingehalten werden.

Weiterhin erlaubt diese Weiterbildung des Verfahrens besonders kostengünstig eine stoffschlüssige Verbindung mit hoher Druckfestigkeit unter Beibehaltung der Oberflächenbeschaffenheit, insbesondere des Korrosionsschutzes durch die Verzinkung, ohne Nachbearbeitungen zu erfordern. So hat sich herausgestellt, dass im Zuge des Laserschweißens verzinktes Material im Bereich der Endkantenverbindung aufschmilzt und das aufgeschmolzene verzinkte Material bzw. das hiermit versetzte Schweißmaterial auch die Schweißnaht verzinkt und damit deren Korrosionsschutz bewirkt. Dies ist auf den gezielten thermischen Energieeintrag in den vergleichsweise schmalen Verbindungsbereich zwischen den beiden aneinander geführten Mantellängskanten zurückzuführen.

Auch erfolgt die Verbindung nicht punktuell wie bei einem Vercrimpen, sondern gleichmäßig entlang der Mantellängskanten des Polrohres. Somit werden durch die Laserschweißnaht geometrische und konstruktive Unebenheiten vermieden und die Herstellung eines besonders flüssigkeits- und gasundurchlässigen Polrohrs sichergestellt.

In einer zweckmäßigen Ausgestaltung wird das mantelseitig geschweißte Polrohr in einem anschließenden Verfahrensschritt einer Stanz- und/oder Biegeeinrichtung zur Abkröpfung einer Anzahl von an einem stirnseitigen Rohrende umfangsseitig verteilten Befestigungslaschen zugeführt. Hierbei kann es sich um Schraublaschen oder -ösen und/oder um Bürsten-Verkrimpungshaken handeln. Die Befestigungslaschen sind hierbei an dem dem Deckel gegenüberliegenden stirnseitigen Rohrende angeordnet.

In einer bevorzugten Ausführung des Verfahrens wird der Deckel durch eine plastische Verformung des Rohrendes, insbesondere mittels Verstemmen oder Crimpen, an dem Polrohr befestigt. Dadurch ist eine besonders einfache und kostengünstige Herstellung des Polgehäuses gewährleistet.

Die Verbindung beziehungsweise die Befestigungsstelle zwischen dem Deckel und dem Polrohr ist fluidundurchlässig, sodass ein fluiddichtes Polgehäuse bereitgestellt ist.

Am Rohrende wird innenwandseitig eine, vorzugsweise umlaufende, Stufenkontur mit einer radialen Auflagefläche zur Abstützung des Deckels und mit einem axialen Ringwandabschnitt eingebracht. Die beispielsweise mittels eines spanenden oder umformungstechnischen Verfahrens erzeugte Stufenkontur stellt während der Montage des Polgehäuses eine exakte Positionierung des Deckels am Polrohr sicher.

In einer geeigneten Weiterbildung wird das Polrohr zur Herstellung der Stufenkontur einer Stempeleinrichtung zugeführt. Anschließend prägt die Stempeleinrichtung die Stufenkontur an dem deckelseitigen Rohrende mittels eines Umformungsprozesses ein. Dadurch ist eine besonders einfache Herstellung der Stufenkontur realisiert.

Der axiale Ringwandabschnitt wird unter Halterung des Deckels radial einwärts umgeformt. Mit anderen Worten wird zur Befestigung des Deckels am Polrohr der Deckel zunächst in die Stufenkontur des Rohrendes eingesetzt. Die axiale Höhe des Ringwandabschnitts ist hierbei vorzugsweise größer als die axiale Höhe des Deckels, sodass der Ringwandabschnitt zumindest teilweise den Deckel im einsitzenden Zustand überragt. Dieser überstehende Bereich des Ringwandabschnitts wird anschließend, insbesondere mittels Verstemmen oder Crimpen, radial einwärts umgeformt, insbesondere umgebogen oder verprägt. Dadurch wird der Deckel von dem umgebogenen Ringwandabschnitt zumindest abschnittsweise übergriffen, sodass eine betriebssichere und fluiddichte Halterung des Deckels am Polrohr gewährleistet ist.

Das gemäß dem vorstehend beschriebenen Verfahren hergestellte Polgehäuse weist besonders niedrige Herstellungskosten auf. Dies überträgt sich insbesondere vorteilhaft auf Anwendungen in der Automobilindustrie, da die benötigten hohen Stückzahlen somit besonders einfach und kostengünstig herstellbar sind. Vor diesem Hintergrund wird gegenüber herkömmlichen Verfahren ein vorverzinktes Blechmaterial verwendet, welches in einem Stanz-Biegeautomaten verarbeitet wird. Hierzu werden zunächst die Rohrmantelflächen (Platinen) vom Blechcoil abgerollt, gestanzt und in einer Umformstation zu einem Rohr runden Querschnitt gebogen (geclincht). Im Anschluss an eine Kalibrierung des Rohraußen- und Rohrinnendurchmessers erfolgt durch das Laserschweißen eine feste und flüssigkeitsundurchlässige Verbindung der Mantellängskanten. Hernach wird der Deckel als Lagerschild form- und/oder kraftschlüssig mittels Verstemmen oder Crimpen der Stufenkontur fluiddicht am Polrohr befestigt. Bei einem derartigen Polgehäuse ist im Wesentlichen keine Nachbearbeitung erforderlich, zumindest jedoch ist die Anzahl von Nachbearbeitungsvorgängen erheblich reduziert.

Das aus einem vorverzinkten Material durch ein Stanz-Biege-Verfahren hergestellte Polgehäuse eignet sich daher besonders für einen Elektromotor, der beispielsweise als Stellantrieb für ein Verstellteil eines Kraftfahrzeugs vorgesehen ist.

Nachfolgend ist ein Ausführungsbeispiel der Erfindung anhand einer Zeichnung näher erläutert. Darin zeigen:
- Fig. 1: schematisch den Verfahrensablauf zur Herstellung eines Pohlgehäuses aus einem Blechmaterial,
- Fig. 2: perspektivisch ein nach dem Verfahren hergestelltes Polrohr mit einer Längsschweißnaht,
- Fig. 3: das Polrohr gemäß Fig. 2 nach erfolgter Laschenabbiegung und Einbringung einer Stufenkontur,
- Fig. 4: schematisch den Prozessablauf zum Einbringen der Stufenkontur und Befestigen eines Deckels am Polrohr, und
- Fig. 5: das Polrohr gemäß Fig. 2 nach erfolgter Deckelbefestigung.

Einander entsprechende Teile sind in allen Figuren mit den gleichen Bezugszeichen versehen.

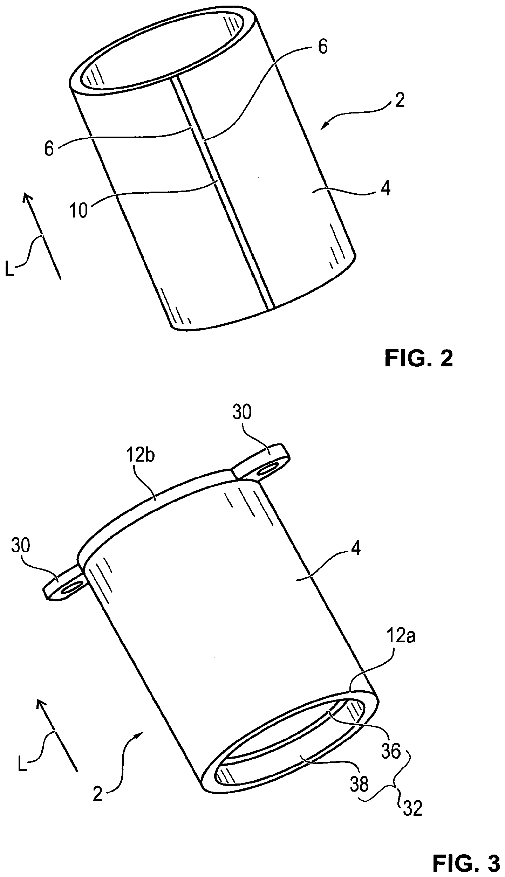

Das in den Fig. 2 bis 5 dargestellte Polrohr 2 ist aus einem vorzugsweise verzinkten Stahlblech gefertigt. Die Rohrmantelfläche beziehungsweise der Rohrmantel 4 des Polrohres 2 bildet zwei gegenüberliegende, in Rohrlängsrichtung L verlaufende Mantellängskanten 6, die gegeneinander geführt sind, wobei axial zwischen den beiden Mangellängskanten 6 des Rohrmantels 4 ein radialer Rohrspalt 8 verläuft. Durch eine axial verlaufende Laserschweißnaht 10 sind der Rohrspalt 8 und damit die einander zugewandten Mantellängskanten 6 stoffschlüssig und flüssigkeits- und/oder gasundurchlässig miteinander zu dem umfangsseitig geschlossenen Polrohr 2 verbunden.

Eine der Stirnseiten oder Rohrenden 12a des Polrohres 2 ist mit einem (Lager-) Deckel 14 verschlossen. Dieser dient als Lagerschild zur Bereitstellung eines die Welle eines Elektromotors bzw. dessen Rotors aufnehmenden Lagers. Hierdurch ist in einfacher sowie flexibler Art und Weise ein zumindest einseitig geschlossenes Polgehäuse 16 des Elektromotors bereitgestellt. An der Innenseite des dadurch hergestellten Polgehäuses 16 können zuvor Permanentmagnete als Stator des Elektromotors angebracht werden. Der Elektromotor ist insbesondere als kompakter Stellantrieb für ein Verstellteil eines Kraftfahrzeugs, beispielsweise für eine Sitzverstellung oder einen Fensterheber, einsetzbar.

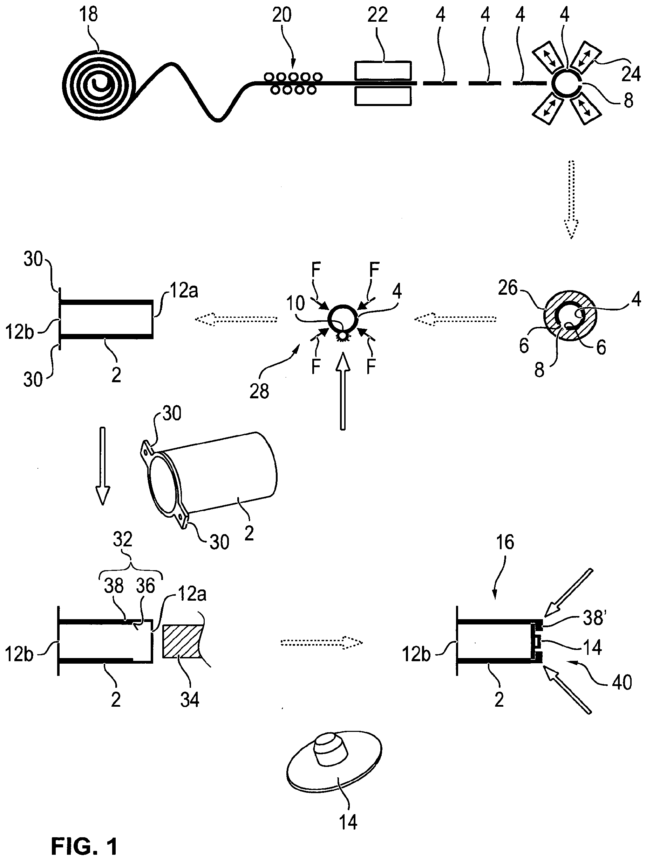

Fig. 1 veranschaulicht schematisch den Verfahrensablauf zur Herstellung von Pohlgehäusen 16 aus einem verzinkten Material. Ausgangspunkt ist eine Blechrolle (Blechcoil) 18 mit einem mehrlagig aufgerollten bereits vorverzinken Blech mit einer Blechdicke von beispielsweise 1,0mm bis 3,0mm. Das Blechcoil 18 wird abgewickelt und in einem ersten Verfahrensschritt in einem Richtapparat 20 kontinuierlich gerichtet, wobei der jeweils gerichtete Blechabschnitt stets Teil des quasi endlosen Blechbandes der Blechrolle 18 ist. Die Bandbreite der Blechrolle 18 entspricht im Wesentlichen der späteren Polrohrlänge.

Im nächsten Verfahrensschritt wird die Größe des benötigten Rohrmantels 4 von der Blechrolle 18 mittels einer Stanzeinrichtung 22 abgelängt. Die dabei erzeugten Blechabschnitte entsprechen bereits den Blech- oder Rohrmänteln 4 der späteren Polrohre 2. Anschließend wird der jeweils abgelängte Blechmantel 4 beziehungsweise das Blechstück in einer Biegeeinrichtung 24 zumindest grob zur späteren Zylinderform gebogen. Die Stanzeinrichtung 22 und die Biegeeinrichtung 24 sind geeigneterweise Bestandteil eines kombinierten Biege- und Stanzautomaten.

Im folgenden Verfahrensschritt erfolgt mittels eines Richtautomaten beziehungsweise mittels einer Kalibriereinrichtung 26 die präzise Formung der Blechmäntel 4 in die ideale, kreisförmige Zylinderform. Hier erfolgt ein Kalibrieren der Rohrkontur, das bedeutet der Innen- und Außendurchmesser, des späteren Polrohres 2 zur praktisch optimalen Rundform.

Im nächsten Verfahrensschritt erfolgt mittels einer Schweißeinrichtung 28 das Laserschweißen entlang der miteinander fluchtenden axialen Mantellängskanten 6 des Rohrmantels 4 aus dem rotationssymmetrisch (z. B. zylinderförmig mit oder ohne Einlaufschräge) gebogenen Blechmantel. Vor und während des Schweißvorgangs wird der Rohmantel 4 in dessen kalibrierter, zylindrischer Idealform gehalten, indem an mehreren Stellen des Rohmantels 4 entsprechende Stützkräfte F angreifen.

Im folgenden Verfahrensschritt erfolgt, wiederum mittels eines nicht näher gezeigten Biege- oder Biege-/Stanzautomaten, das Ausbilden von Anschraubpunkten und/oder Bürsten-Verkrimpungshaken an der der Stirnseite 12a gegenüberliegenden Stirnseite (Rohrende) 12b des geschweißten Polrohres 2, indem entsprechende Befestigungslaschen 30 oder dergleichen von der Mantelfläche 4 umfangsseitig an exponierten Stellen abgebogen werden.

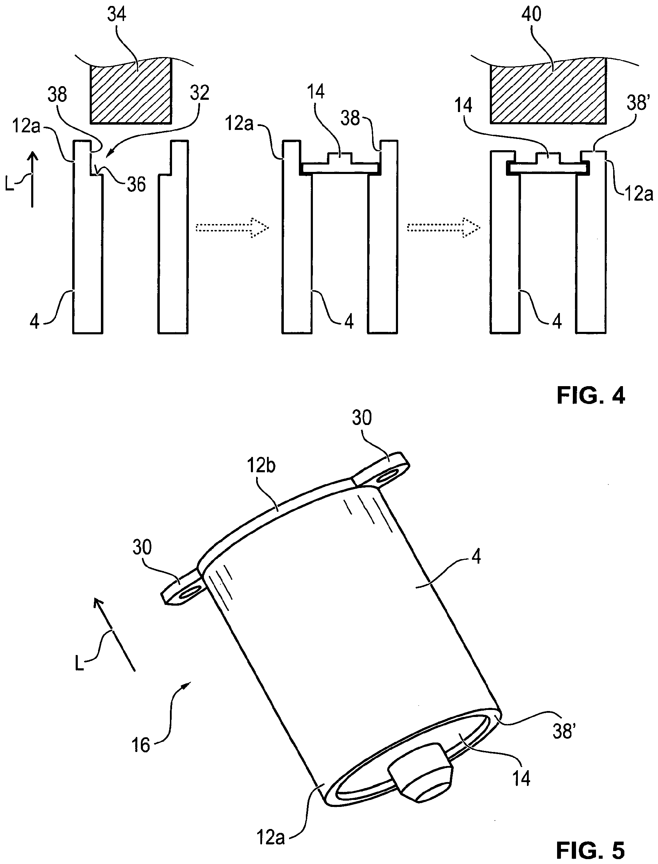

Zur Befestigung des Lagerdeckels beziehungsweise Lagerschildes 14 wird - wie beispielsweise auch in der Fig. 4 dargestellt - zunächst eine Stufenkontur 32 in das Rohrende 12a, das bedeutet an der den Befestigungslaschen 30 gegenüberliegenden Stirnseite des Polrohrs 2, eingebracht. Hierzu wird das Polrohr 2 in eine Stempeleinrichtung 34 eingelegt, welche beispielsweise auch Teil des die Biegeeinrichtung 24 und Stanzeinrichtung 22 umfassenden Biege- und Stanzautomaten sein kann. Durch die Stempeleinrichtung 32 wird die Stufenkontur 32 unter Ausbildung einer radialen Auflagefläche 36 und eines axialen Ringwandabschnitts 38 in die Innenwand des Rohrendes 12a eingeprägt (Fig. 4 links).

In einem weiteren Verfahrensschritt (Fig. 4 mittig) wird der Lagerdeckel 14 auf die Auflagefläche 36 aufgesetzt, sodass er im Wesentlichen vollständig innerhalb des Ringwandabschnitts 38 einsitzt. Abschließend wird der Lagerdeckel 14 durch eine Crimpvorrichtung 40 am Polrohr 2 befestigt. Hierzu werden die dem Lagerdeckel 14 überstehenden Bereiche des Ringwandabschnitts 38 radial einwärts umgeformt (Fig. 4 rechts). Der umgeformte (umgebogene, verprägte) Ringwandabschnitt 38' übergreift somit zumindest abschnittsweise den Lagerdeckel 14. Dadurch ist eine fluiddichte Befestigung des Lagerdeckels 14 am Polrohr 2 realisiert. Das Lagerschild 14 wird hierbei beispielsweise als Fertigteil oder Halbzeug bereitgestellt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Polrohr
- 4: Rohrmantel/Rohrmantelfläche/Blechmantel
- 6: Mantellängskante
- 8: Rohrspalt
- 10: Laserschweißnaht
- 12a, 12b: Stirnseite/Rohrende
- 14: Deckel/Lagerdeckel/Lagerschild
- 16: Polgehäuse
- 18: Blechrolle/Blechcoil
- 20: Richtapparat
- 22: Stanzeinrichtung
- 24: Biegeeinrichtung
- 26: Richtautomat/Kalibriereinrichtung
- 28: Schweißeinrichtung
- 30: Befestigungslaschen
- 32: Stufenkontur
- 34: Stempeleinrichtung
- 36: Auflagefläche
- 38, 38': Ringwandabschnitt
- 40: Crimpvorrichtung

- L: Rohrlängsrichtung
- F: Stützkräfte

## Patentansprüche

1. Verfahren zur Herstellung eines Polgehäuses (16) für einen Elektromotor,
- bei welchem eine Rohrmantelfläche (4) aus einem Blechmaterial bereitgestellt wird,
- bei welchem die Rohrmantelfläche (4) aus dem Blechmaterial zu einem zylinderförmigen Polrohr (2) derart geformt wird, dass die in Rohrlängsrichtung (L) verlaufenden Mantellängskanten (6) der Rohrmantelfläche (4) einander zugewandt sind, und
- bei welchem die Mantellängskanten (6) der Rohrmantelfläche (4) unter Bildung eines geschlossenen Polrohres (2) miteinander verbunden werden, wobei ein bereitgestellter Deckel (14) als Lagerschild an einem stirnseitigen Rohrende (12a) des Polrohres (2) form- und/oder kraftschlüssig befestigt wird, wobei am Rohrende (12a) innenwandseitig eine umlaufende Stufenkontur (32) mit einer radial erstreckenden Auflagefläche (36) zur Abstützung des Deckels (14) und mit einem axial erstreckenden Ringwandabschnitt (38) eingebracht wird, **dadurch gekennzeichnet, dass** der axiale Ringwandabschnitt (38) unter Halterung des Deckels (14) umlaufend radial einwärts umgeformt wird, wobei eine fluidundurchlässige Verbindung zwischen dem Deckel (14) und dem Polrohr (2) gebildet wird.

2. Verfahren nach Anspruch 1,
**dadurch gekennzeichnet,**
**dass** der Rohrmantel (4) einer Biegeeinrichtung (24) zur Vorformung in eine zumindest annähernd runde Form und anschließend einer Kalibriereinrichtung (26) zur Erstellung der kreisrunden Form des zylindrischen Polrohrs (2) zugeführt wird.

3. Verfahren nach Anspruch 1 oder 2,
**dadurch gekennzeichnet,**
**dass** der geformte Rohrmantel (4) einer Schweißeinrichtung (28) zugeführt und die Mantellängskanten (6) des Rohrmantels (4) durch eine Laserschweißnaht (10) stoffschlüssig miteinander verbunden werden.

4. Verfahren nach einem der Ansprüche 1 bis 3,
**dadurch gekennzeichnet,**
**dass** das umfangsseitig geschlossene Polrohr (2) einer Stanz- und/oder Biegeeinrichtung zur Ausbildung einer Anzahl von an einem stirnseitigen Rohrende (12b) umfangsseitig verteilt angeordneten Befestigungslaschen (30) zugeführt wird.

5. Verfahren nach einem der Ansprüche 1 bis 4,
**dadurch gekennzeichnet,**
**dass** der Deckel (14) durch eine plastische Verformung des Rohrendes (12a) an dem Polrohr (2) befestigt wird.

6. Verfahren nach einem der Ansprüche 1 bis 5,
**dadurch gekennzeichnet,**
**dass** das Polrohr (2) einer Stempeleinrichtung (34) zugeführt und die Stufenkontur (32) an dem Rohrende (12a) eingeprägt wird.

7. Polgehäuse (16) für einen Elektromotor, das aus einem Blechmaterial, gemäß dem Verfahren nach einem der Ansprüche 1 bis 6, hergestellt ist.

8. Elektromotor mit einem Polgehäuse (16) nach Anspruch 7.

## Claims

1. Method for producing a pole housing (16) for an electric motor,
- in which a tube jacket surface (4) from a sheet material is provided,
- in which the tube jacket surface (4) from the sheet material is formed into a cylindrical pole tube (2) in such a way that the longitudinal jacket edges (6) of the tube jacket surface (4) extending in the longitudinal direction (L) of the tube face each other, and
- in which the longitudinal jacket edges (6) of the tube jacket surface (4) are connected to each other to form a closed pole tube (2),
- wherein a provided cover (14) is fastened positively and/or non-positively as a bearing shield to a front tube end (12a) of the pole tube (2), wherein at the tube end (12a) on the inner wall side a circumferential stepped contour (32) with a radially extending bearing surface (36) for supporting the cover (14) and with an axially extending annular wall section (38) is inserted,
**characterized in that**
the axial annular wall section (38) is circumferentially deformed radially inwards while holding the cover (14), wherein a fluid-impermeable connection is formed between the cover (14) and the pole tube (2).

2. Method according to claim 1,
**characterized in**
**that** the tube jacket (4) is fed to a bending device (24) for preforming into an at least approximately round shape and subsequently is fed to a calibrating device (26) for creating the circular shape of the cylindrical pole tube (2).

3. Method according to claim 1 or 2,
**characterized in**
**that** the formed tube jacket (4) is fed to a welding device (28) and the longitudinal jacket edges (6) of the tube jacket (4) are integrally connected to each other by a laser weld seam (10).

4. Method according to one of claims 1 to 3,
**characterized in**
**that** the circumferentially closed pole tube (2) is fed to a punching and/or bending device to form a plurality of fastening lugs (30) arranged at a front end of the tube (12b) in a circumferentially distributed manner.

5. Method according to one of claims 1 to 4,
**characterized in**
**that** the cover (14) is fastened to the pole tube (2) by a plastic deformation of the tube end (12a).

6. Method according to one of claims 1 to 5,
**characterized in**
**that** the pole tube (2) is fed to a stamping device (34) and the stepped contour (32) is embossed on the tube end (12a).

7. Pole housing (16) for an electric motor, which is made of a sheet material according to the method according to one of claims 1 to 6.

8. Electric motor with a pole housing (16) according to claim 7.

## Revendications

1. Procédé de fabrication d'un boîtier de pôle (16) pour un moteur électrique,
- dans lequel une surface d'enveloppe tubulaire (4) d'un matériau en feuille est fournie,
- dans lequel la surface d'enveloppe tubulaire (4) est formée du matériau en feuille en un tube polaire (2) cylindrique de telle sorte que les bords longitudinaux (6) de la surface d'enveloppe tubulaire (4) s'étendant dans la direction longitudinale (L) du tube se font face, et
- dans lequel les bords longitudinaux d'enveloppe (6) de la surface d'enveloppe tubulaire (4) sont reliés entre eux pour former un tube polaire (2) fermé,
- dans lequel un couvercle (14) fourni, en tant qu'écran d'extrémité, est fixé par complémentarité de forme et/ou par adhérence à une extrémité (12a) du tube polaire (2) côté frontal, dans lequel à l'extrémité du tube (12a) du côté de la paroi intérieure, un contour en gardin (32) périphérique avec une surface d'appui (36) s'étendant radialement pour soutenir le couvercle (14) et avec une section de paroi annulaire (38) s'étendant axialement est introduit,
**caractérisé en ce**
**que** la section de paroi annulaire (38) axiale est déformée circonférentiellement radialement vers l'intérieur tout en maintenant le couvercle (14), dans lequel une connexion imperméable aux fluides est formée entre le couvercle (14) et le tube polaire (2).

2. Procédé selon la revendication 1,
**caractérisé en ce**
**que** l'enveloppe tubulaire (4) est amenée à un dispositif de cintrage (24) pour la préformer en une forme au moins approximativement ronde et ensuite à un dispositif de calibrage (26) pour créer la forme circulaire du tube polaire (2) cylindrique.

3. Procédé selon la revendication 1 ou 2,
**caractérisé en ce**
**que** l'enveloppe tubulaire (4) est amené à un dispositif de soudage (28) et les bords longitudinaux (6) de l'enveloppe tubulaire (4) sont reliés entre eux par adhérence de matière au moyen d'une soudure au laser (10).

4. Procédé selon l'une des revendications 1 à 3,
**caractérisé en ce**
**que** le tube polaire (2) fermé circonférentiellement est amené à un dispositif de poinçonnage et/ou de pliage pour former un pluralité de languettes de fixation (30) disposées de manière répartie circonférentiellement sur une face frontale du tube (12b).

5. Procédé selon l'une des revendications 1 à 4,
**caractérisé en ce**
**que** le couvercle (14) est fixé au tube polaire (2) par déformation plastique de l'extrémité du tube (12a).

6. Procédé selon l'une des revendications 1 à 5,
**caractérisé en ce**
**que** le tube polaire (2) est amené à un dispositif d'estampage (34) et le contour en gardin (32) est embouti à l'extrémité du tube (12a).

7. Boîtier de pôle (16) pour un moteur électrique, ledit boîtier de pôle (16) étant fabriqué d'un matériau en feuille conformément au procédé selon l'une des revendications 1 à 6.

8. Moteur électrique avec un boîtier de pôle (16) selon la revendication 7.
